# EUROPEAN PATENT SPECIFICATION

(11) **EP 4 532 615 B1**
(45) Date of publication and mention of the grant of the patent: **14.01.2026**
(21) Application number: 23730947.1
(22) Date of filing: 24.05.2023
(51) Int. Cl.: C09D 5/33, C09D 5/02, C09D 133/02

(54) **WATER-BASED MULTI-COMPONENT PAINT SYSTEM**
MEHRKOMPONENTEN-WASSERLACKSYSTEM
SYSTÈME DE PEINTURE MULTI-COMPOSANTS À BASE D'EAU

(30) Priority: 25.05.2022 IT 202200010901
(43) Date of publication of application: 09.04.2025
(73) Proprietor: Team Segnal S.r.l., 26867 Somaglia (LO) (IT)
(72) Inventor: BIGNAMI, Claudio Giuseppe, 26841 Casalpusterlengo (LO) (IT)
(74) Representative: Dragotti & Associati S.P.A.
(86) International application number: PCT/IB2023/055322
(87) International publication number: WO 2023/228097

(56) References cited:
- WO-A1-2017/135925
- CN-A- 110 423 497
- CN-C- 1 324 099
- US-A1- 2015 259 562
- US-A1- 2018 162 997
- US-A1- 2018 201 733

## Description

The present invention relates to a water-based multi-component paint system. The film obtained by applying the system onto a road surface after mixing the components is also described, as well as the use thereof in horizontal road markings.

### State of the art

Horizontal road markings, born in the early 1900s, play various roles: from an optical orientation tool to a traffic flow regulator; from informing drivers about oncoming dangers, to restrictions on driving conduct.

Consequently, horizontal markings play a priority role in road safety, for reducing the number of deaths and injuries.

Efficiency and durability of road markings are therefore required by both road users and road authorities. From the users' point of view, the contrast of color and luminance with the road surface are properties that should be maximized (Horberry et al., Transportation Research Part F Traffic Psychology and Behaviour 2006, 9(1):77-87). However, the choice of the type of road marking materials by road administrators depends on many factors, including desired durability, required visibility, price and local regulations.

Horizontal road markings are normally made up of a coating layer containing or over-deposited (drop-on) with reflective materials, most frequently glass beads.

In addition to durability and functionality of road markings, ease of application and consequence on human health and the environment are primary considerations for the selection thereof. Horizontal road marking paint systems can be divided into: two-component materials of an epoxy, polyurethane or unsaturated acrylic nature, which cure due to the chemical reaction that occurs at the application site, thermoplastic powders based on hydrocarbon or alkyd resins which require heat for application onto a road, paints which dry on evaporation of the dissolving solvent medium and water-based paints which cure at the application site due to loss of the neutralizing agent (for example ammonia).

Thermoplastic materials are essentially solvent-free and, although some of the resins for the production thereof come from renewable natural sources, the need for double heating (production-application) significantly increases their environmental impact. Some two-component systems also have the need for heating, as well as toxicity issues associated with the use of epoxy resin, isocyanates or acrylic monomers and the hazard of using organic peroxides as *in situ* reaction catalysts.

In the case of solvent-based (solventborne) paints, these are traditionally products that include organic binders of different nature: alkyd binders, alkyd binders in combination with chlorinated rubbers or acrylic binders, soluble in organic solvent. The solvent phase of this system results in a significant release of VOCs (volatile organic compounds) into the atmosphere.

The impact of these fumes on the environment is greatly aggravated by the photochemical decomposition that these substances undergo in the atmosphere.

During their decomposition in the atmosphere, VOCs interact with nitrogen oxides (NOx), significantly increasing the formation of ozone. Ground-level ozone is a significant lung irritant, globally recognized as one of the key pollutants responsible for smog.

Stability over time of solventborne paint products for road markings is on average poor, in fact they can have sedimentation and viscosity issues. The application of the solventborne product generates a coating that does not exceed 400 µm. In fact, thicker films tend to form a superficial skin which slows down the evaporation of the coating, requiring much more time for drying, even in favorable conditions.

The application of solventborne paints may be carried out at room temperatures from 5 to 40°C and with a surface temperature below 50°C. The drying of such paints is strongly influenced by the air, the surface temperature, the applied film construction, and the solvent mixture used.

Conversely, the impact of water-based paints on human health and the environment is significantly reduced compared to other materials.

The attention to the environment has therefore prompted paint manufacturers to prefer water-based (waterborne) products.

The first waterborne paint products were marketed in the USA in the early 80s.

These products were quite similar to solventborne coatings. Their curing was linked only to the loss of the solvent phase (water) which automatically led to drying (lacquer paints). However, they suffered from a very long drying time parallel to the development of resistance to washout, which was seriously influenced by the weather conditions.

In the 1990s, the so-called "quick-set" technology was introduced, which introduces ammonia into the polymer forming the binding portion of these waterborne paint products. Drop of pH occurs as ammonia evaporates and, as a result, the polymer irreversibly solidifies.

The International Patent Application WO2022/112958 in the name of the Applicant describes a fast-curing waterborne paint composition capable of withstanding adverse environmental conditions, such as snowfall and heavy rain, which maintains the characteristics of wear resistance, excellent visibility and slipping resistance obtainable using traditional solventborne or thermoplastic products, while having a low environmental impact. US2018/162997A1 discloses a multi-component water-based paint system comprising an acrylic component consisting of an acrylic polymer aqueous emulsion anionically stabilized at basic pH with a volatile base and an epoxy-polyamine component.

This invention shows an important effectiveness for the purpose of improving the coating film formation speed, which is however penalized with amounts of applied coating product exceeding 800 g/m².

High-thickness coatings, deriving from applications of a coating product exceeding 800 g/m², are required in tenders where very long-lasting performance of the coating over time (2/4 years) is required.

It is therefore clear the need to make available new waterborne products with high-thickness (≥800 g/m²), where prolonged performance of the coating over time is required (2/4 years and more).

### Summary of the invention

An object of the present invention is to make available new waterborne paint products allowing the formation of a thick film on the road surface which is particularly resistant to foot traffic and having mechanical resistance performances higher than the standard.

A further object of the present invention is to make available new paint products which have extended coating performance over time (2/4 years and more).

The main objects described above are achieved with a water-based multi-component paint system according to claim 1, with use thereof in horizontal road markings according to claim 17, with a coating film according to claim 18 and with a method for reducing the curing time according to claim 19.

### Description of the figures

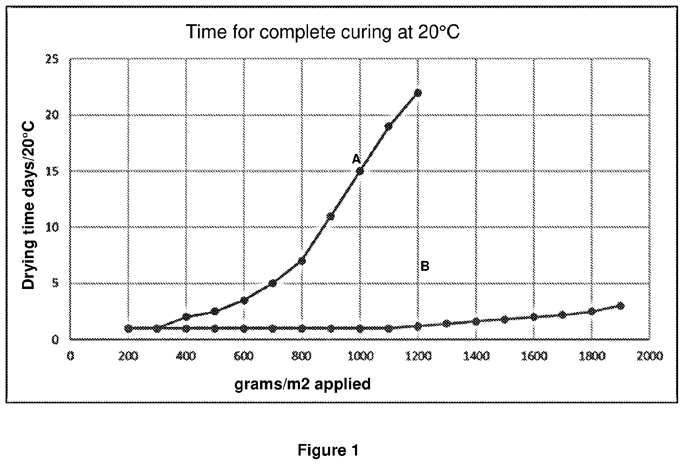

**Figure 1****.** In the graph, a reference paint composition (line A) is compared with the multi-component paint system of the present invention (line B).

### Definitions

Unless otherwise defined, all terms of the art, notations and other scientific terminology used herein are intended to have the meanings commonly understood by those skilled in the art to which this disclosure pertains. In some cases, terms with commonly understood meanings are defined herein for clarity and/or for ready reference; thus, the inclusion of such definitions in the present disclosure should not be construed to represent a substantial difference over what is generally understood in the art.

The terms **"approximately"** and **"about"** used in the text refer to the range of the experimental error that is inherent in the execution of an experimental measurement. The terms **"comprising", "having", "including"** and **"containing"** are to be intended as open-ended terms (*i.e.,* meaning "comprising, but not limited to"), and are to be considered as a support also for terms such as "consist essentially of", "consisting essentially of", "consist of", or "consisting of".

The terms "**consist essentially of**", "**consisting essentially of**" are to be intended as semi-closed terms, meaning that no other ingredients affecting the novel features of the invention are included (optional excipients may therefore be included).

The terms **"consists of", "consisting of"** are to be intended as closed terms.

The term **"acrylic polymer"** is intended to indicate a pure or styrene-modified acrylic polymer.

The term **"anionically stabilized"** is intended to indicate a polymer bearing in the chain a functional group which expresses an anionic charge (*e.g*.: R-COO⁻) neutralized with a countercation (*e.g*.: NH₄⁺). The anionic functional group, once neutralized, confers to the system a sufficient polarity necessary to stabilize the suspension of the polymer colloidal particle. The release of the countercation (volatile base) results in destabilization of the colloidal suspension and subsequent coagulation, consequently triggering the particles coalescence process.

The term **"volatile base"** is intended to indicate a base which should be sufficiently volatile to be released under air-drying conditions.

The term **"epoxy-polyamine component or epoxy-polyamine adduct"** is intended to indicate a polymer containing at least the following four blocks:
- a difunctional epoxy block which defines the linear backbone of the final compound; typical examples are diglycidyl ethers of Bisphenol A and F, such as the resins Ankarez^{®}, Araldite^{®}, Bekopox^{®}, Epikote^{®}, Epilox^{®}, Eponac^{®}, Eposir^{®}, Epotec^{®}, Epon^{®};
- an alkylamine with a linear or branched C₁-C₆ aliphatic chain which introduces the hydrophobic character;
- a polyetheramine (-oxy-propylene, PO, -oxy-ethylene, EO, or a combination thereof) which introduces the hydrophilic character; typical examples of which are Jeffamine^{®} polyetheramines;
- a chain terminator which can be an amino or amide-amino product.

The term **"C₁-C₆ alkyl"** as used herein refers to a branched or linear hydrocarbon containing from 1 to 6 carbon atoms. Examples of C₁-C₆ alkyl groups include but are not limited to methyl, ethyl, n-propyl, isopropyl, n-butyl, sec-butyl, isobutyl, tert-butyl, n-pentyl, n-hexyl.

The term **"high-boiling glycol-ether"** is intended to indicate a compound having a boiling point between 225 and 250°C.

The term **"self-crosslinking functionalities"** is intended to indicate the reactive functionalities of a polymer necessary for its curing/crosslinking process (polymerization/polycondensation), without additions of further reagents needed.

The term **"Minimum Film Forming Temperature"** (MFFT) is to be understood as the minimum film forming temperature (MFFT) of a paint or a coating, *i.e.* it is the minimum temperature at which the product, applied on a substrate, coalesces in the form of an homogeneous and transparent film.

The two main international standards for measuring the MFFT are:
ASTM-D2354 - *Standard Test Method for Minimum Film Formation Temperature (MFFT) of Emulsion Vehicles.*
ISO 2115:1996 *Plastics - Polymer dispersions - Determination of white point temperature and minimum film-forming temperature.*

The term **"Multi-component paint system"** is intended to indicate a paint system made up of 2 or more components which are mixed together at the time of use.

The term **"high thickness"** is intended to indicate a thickness equal to or greater than 800 g/m², preferably comprised between 800 g/m² and 2000 g/m².

### Detailed description of the invention

An object of the present invention is represented by a water-based multi-component paint system comprising:
- an acrylic component consisting of an acrylic polymer in aqueous emulsion anionically stabilized at basic pH with a volatile base and containing self-crosslinking functionalities, preferably added with a high-boiling glycol-ether;
- an epoxy component consisting of a liquid epoxy resin;
- an epoxy-polyamine component, preferably added with a polythiol.

In a preferred embodiment, said components are mixed in the paint system application step.

The preferable combination ratios of the individual reactive components, expressed in solid content (% by weight) with respect to the total weight of the components, identified in the present invention are selected from:
1) Acrylic dispersion component: min 55% - max 75%. Preferably of 60-70 %;
2) Epoxy component in aqueous dispersion: min 15% - max 30%. Preferably of 17-22%;
3) Epoxy-polyamine component: min 3% - max 18%. Preferably of 10-15%. Preferably the epoxy-polyamine component is added with a polythiol: min 1% - max 15%. Preferably of 5-10%.

Preferably, the acrylic polymer has a Minimum Film Forming Temperature (MFFT) comprised between 0 and 40°C, preferably between 10 and 20°C.

Preferably, the acrylic polymer is anionically stabilized at a basic pH between 8 and 11.

Preferably the acrylic polymer is in the form of an anionic colloid.

Preferably, the volatile base which can be used in the present invention is selected from ammonia, morpholine, 2-methylaminoethanol, 2-dimethylaminoethanol, N-methylmorpholine and ethylenediamine. More preferably, ammonia.

The self-crosslinking functionalities are obtained through the introduction of monomers in the chain or external reagents, which have a reactivity attributable to the Michael synthesis (diketo with amine or diketo with hydrazide), as in the following scheme:

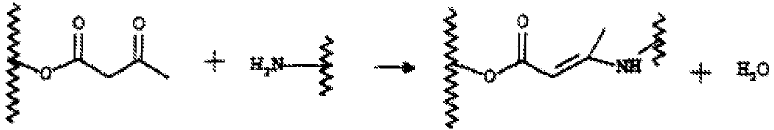

Preferably, the most widely used reactive system for functionalizing acrylic polymers is the diacetone-acrylamide and adipic acid dihydrazide DAAM-ADH system (Diacetone acrylamide, DAAM and Adipic acid dihydrazide, ADH)).

The diketone functionalities of the acrylic polymer (*e.g*., DAAM) react with an amine or hydrazide which is externally added to the polymer (*e.g*., ADH).

In a preferred embodiment, the acrylic polymer containing self-crosslinking functionalities further comprises a polyamine polymer, which has the function of a coagulant. The nature of said polyamine polymer is different from the nature of the epoxy-polyamine adduct; preferably the polyamine polymer is polymerized from a monomer mixture comprising at least one acid monomer and at least one amine monomer.

The acid monomers suitable for preparing the polyamine polymer are acrylic acid, methacrylic acid, and mixtures thereof.

Some of the amine monomers suitable for preparing the polyamine polymer include alkylaminoalkyl esters or amides of unsaturated acids, such as acrylic acid or methacrylic acid.

The polyamine polymer can be mixed with the acrylic polymer, or the two polymers can be crosslinked with each other.

Examples of polyamine polymers which can be used in the present invention, and which are commercially available, are described in the European Patent Applications EP0409459, EP0811663 and EP0832949.

Although the inventors do not wish to be limited by any theory of interpretation, it is believed that the loss of ammonia, due to the evaporation upon contact with the air, triggers the reactivity of the coagulating polymer which, protonating itself, reacts with the stabilizing anionic charges of the colloid surface, neutralizing them. The coagulating polymer results in the rapid loss of sensitivity to water in the first drying phase (early rain resistance).

Preferred examples of acrylic polymers which can be used in the present invention are the following products, which are commercially available:

| **Polymer** | | **Commercial Name** | **Polymer Type** | **MFFT °C** | **Manufacturer** |
|---|---|---|---|---|---|
| E | 5 | Setaqua Expressline 88 | acrylic | 15 | ALLNEX |
| E | 9 | Encor DT 211 | acrylic | 17 | ARKEMA |
| E | 17 | Fastrack 2706 | acrylic | 13 | DOW CHEMICAL |
| E | 24 | NeoCryl A-515 | acrylic | 38 | DSM |
| E | 25 | EPS 717 | acrylic | 17 | EPS |
| E | 26 | Domemul AA 7601 | acrylic | 30 | HELIOS |
| E | 27 | Indofil E822 | acrylic | 15 | INDOFIL IND |
| E | 28 | Mowinil 1760 | styrene/acrylic | 22 | NIPPON GOASEI |
| E | 29 | Pliodisp 6660 | acrylic | 10 | OMNOVA |
| E | 30 | RayCryl 849 | acrylic | 13 | SPECIALTY POLYMERS INC |
| E | 31 | Prox AM 157 | acrylic | 13 | SYNTRON |
| E | 32 | Viawan RD 57 | acrylic | 18 | WANA QUIMICA |
| E | 33 | Wancryl | acrylic | 16 | WANA QUIMICA |
| E | 34 | ER 350 | acrylic | 19 | PIDILITE LTD - NYMCO |
| E | 35 | RMPT 515 | acrylic | 35 | PIDILITE LTD - NYMCO |

The preferred acrylic polymers are E5, E17, E25, E30, E31, E34 and E35.

In a preferred embodiment, the acrylic component is added with a high-boiling glycol ether.

For the purposes of the present invention, the following high-boiling glycol ethers (indicated by way of non-limiting example) may be used: Diethylene glycol mono-butyl ether (DB), Dipropylene glycol n-butyl ether (DPnB), Propylene glycol phenyl ether (PPh), Tripropylene glycol mono-methyl ether (TPM).

Preferred examples of high-boiling glycol ethers which may be used in the present invention, and which are commercially available, are DB and DPnB.

In the paint system according to the invention, the high-boiling glycol-ether has the function of a coalescent.

Advantageously, the addition of the coalescent has the function of aiding the formation of a film of the polymer in colloidal form, and adequately adjusting the drying time of the applied coating.

The coagulation results in the polymer precipitation and separation thereof from the aqueous medium which, at this point, remains free to volatilize. The coagulated polymer reaches the inter-colloidal distance (between particles) necessary for the coalescence process to take place more rapidly.

The direct consequence of this acceleration is a more rapid loss of sensitivity to water (resistance to wash-out). Complete curing and final performances of the film remain dependent on the polymer intrinsic reactivity expressed during the crosslinking process.

In a preferred embodiment, the liquid epoxy resin according to the invention is an emulsion or in an emulsifiable state.

Epoxy resins are obtained from the condensation of epichlorohydrin with bisphenol.

The combination ratio of the two components determines the extension of the epoxy chain, and the reactive glycidyl group residue, chain terminator.

The minimum unit produced by this condensation reaction (polycondensation) is the diglycidyl ether of bisphenol F or A. 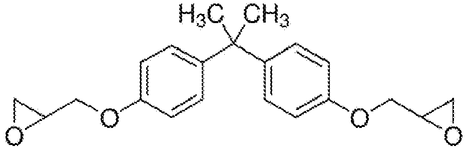 diglycidyl ether of bisphenol A 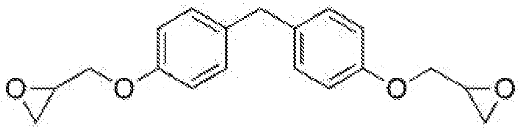 diglycidyl ether of bisphenol F

A more in-depth description of the chemical-physical characteristics that distinguish epoxy resins in "aqueous dispersion/emulsion" is provided in the document "3.2.2 Water-borne two-component epoxy paints. pp. 200-206; Vincentz network 2012".

In a further preferred embodiment, the liquid epoxy resin according to the invention consists of molecular structures comprising 1 to 3 bisphenol groups in the chain and diglycidyl ether endings of the formula:

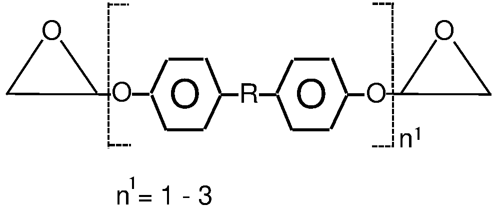

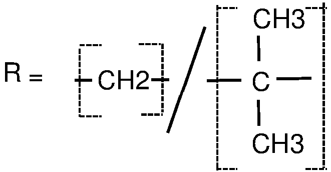

The chemical reactivity of these polymers is directly dependent on the amount of oxirane groups (glycidyl-ether) present in the chain.

This amount is commonly expressed by the epoxy equivalent (EEW) expressed in grams/equivalent based on the solid resin.

With reference to epoxy resins in aqueous dispersion suitable for the purposes of the present invention, examples of commercially available products are:
Olin Epoxy : D.E.R.^{™} 913, EEW 167 - 193
Olin Epoxy : D.E.R.^{™} 915, EEW 475 - 500
Olin Epoxy : D.E.R.^{™} 917, EEW 193 - 204
SIR: WD 733/67, EEW 185 - 195
Huntsman: Araldite^{®} PZ 756-1/67, EEW 270 - 295
Huntsman: Araldite^{®} PZ 3961-1, EEW 450 - 510
Huntsman: Araldite^{®} PY 33757, EEW 172 - 182
Huntsman: Araldite^{®} PZ 323, EEW 222 - 250
Huntsman: Araldite^{®} PY 3961-1, EEW 450 - 510
Evonik: ANCAREZ^{®} AR555, EEW 500 - 550
Hexion: EPI-REZ^{™} Resin 7510-W-60, EEW 462 - 536
Hexion: EPI-REZ^{™} Resin 7723-W-53, EEW 185 - 215
Hexion: EPI-REZ^{™} 6520-WH-53, EEW 500 - 600

In a further preferred embodiment, the liquid epoxy resin according to the invention has an epoxy equivalent (EEW) comprised between 170 and 300 as expressed in grams/equivalents on the solid resin, more preferably between 200 and 250.

More preferably, the epoxy resins in aqueous dispersion suitable for the purposes of the present invention are:
Olin Epoxy : D.E.R.^{™} 917, EEW 193 - 204
SIR: WD 733/67, EEW 185 - 195
Huntsman: Araldite^{®} PZ 756-1/67, EEW 270 - 295
Hexion: EPI-REZ^{™} Resin 7723-W-53, EEW 185 - 215

For the purposes of the present invention, epoxy-polyamine adducts having a structure which can be schematized as follows may be used as epoxy-polyamine component:

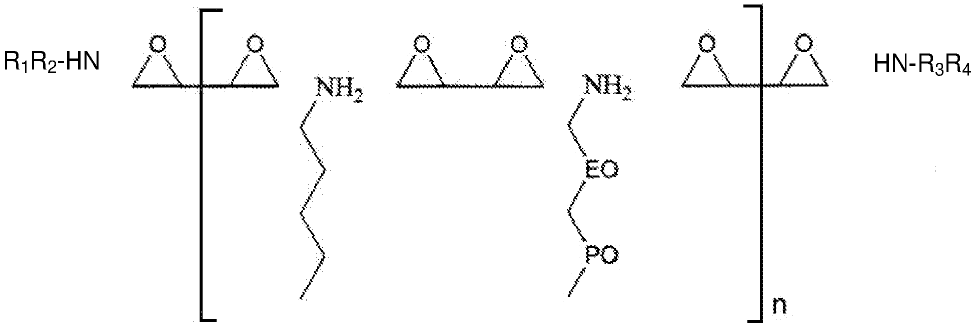

In particular: 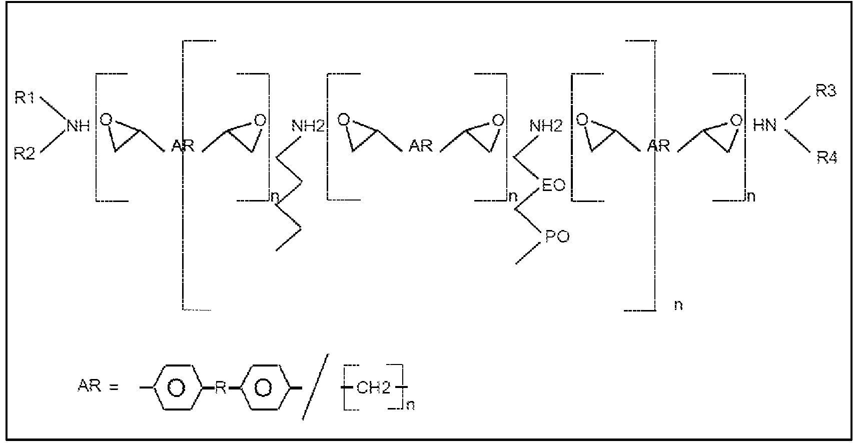 wherein n is between 1 and 15, R₁, R₂, R₃ and R₄, which can be the same or different, are independently selected from H, alkyl, amino or amide radicals.

AR consists of a prevalence of diphenyl aromatic radical, in which R consists of =C(-CH₃)₂ (Bisphenol A) or -CH₂-(Bisphenol F), combined with a minor percentage of linear or branched alkyl radicals.

The structure in question shows the H of the HNR₁R₂ and HNR₃R₄ radicals which will react with the adjacent oxirane radical to generate the "adduct": R₁R₂N-adduct-NR₃R₄.

In particular:

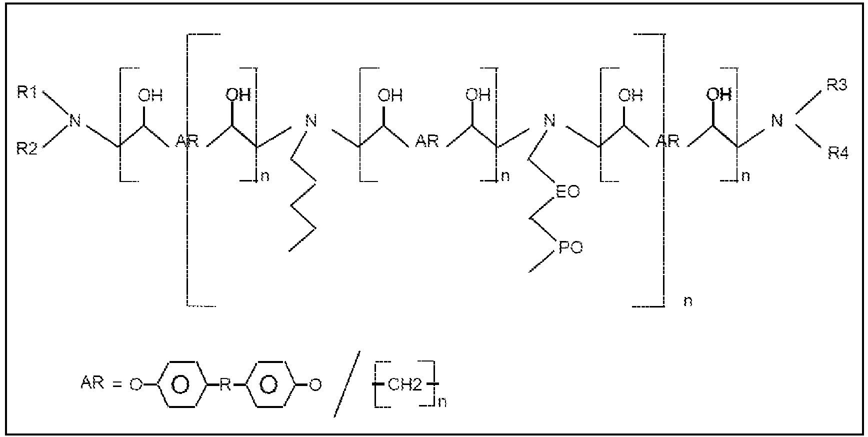

Epoxy-polyamine adducts can be prepared from:
a) at least one bis-epoxy compound, preferably a diglycidyl ether of Bisphenol A and F;
b) at least one alkylamine with a linear or branched C₁-C₆ aliphatic chain;
c) at least one polyetheramine based on -oxypropylene (PO), -oxyethylene (EO), or combinations thereof;
d) at least one amino or amide-amino chain terminator.

Typical examples of bis-epoxy compounds are the diglycidyl ethers of Bisphenol A and **F,** such as the following resins: Ankarez^{®} , Araldite^{®}, Bekopox^{®}, Epikote^{®}, Epilox^{®}, Eponac^{®}, Eposir^{®}, Epotec^{®}, Epon^{®}.

Some examples of poly-ethoxylated or poly-propoxylated amines (e.g., Jeffamine^{®}) that can be used are:
Poly-oxy-ethylene monoamine (di- or polyamine) 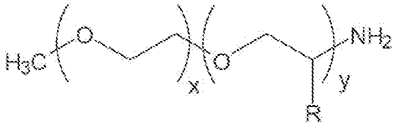
Poly-oxy-propylene diamine (or polyamine) 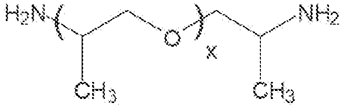
Poly-oxy-ethylene/propylene diamine (or polyamine) 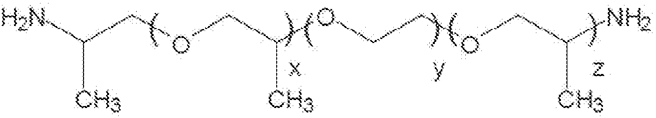
Epoxy-polyamine adducts are described in the following reference literature:
   1) Binder systems for waterborne two-pack products for car refinishes application. Progress in Organic Coatings 48 (2003) 153-160.
   2) EP 1 280 842 B1;
   3) OD / Coatings Manual 2011, Appendix "C". Pag. 5: Curing Agent for Epoxies; "Polyamine adducts".

Preferred examples of epoxy-polyamine adducts which may be used in the present invention, and which are commercially available, are the following products:

| **Polymer** | | **Commercial Name** | **Polymer Type** | **Manufacturer** |
|---|---|---|---|---|
| PA | 30 | EPIKURE 8545-W-52 | epoxy-amine adduct | HEXION |
| PA | 31 | EPIKURE 8546-W-55 | epoxy-amine adduct | HEXION |
| PA | 32 | MERGINAMID A 154 | polyaminoamide adduct | HOBUM |
| PA | 35 | MERGINAMID A 210/5 | epoxy-amine adduct | HOBUM |
| PA | 40 | Amirez 148/024 | epoxy-amine adduct | INCOREZ |
| PA | 41 | Amirez 148/055 | epoxy-amine adduct | INCOREZ |
| PA | 42 | Epilox H 12-01 | epoxy-amine adduct | LEUNA HARZE |
| PA | 44 | MEEDamine^{®} 2362 W | polyaminoamide adduct | MEEDER |
| PA | 46 | MEEDamine^{®} 2801 W | epoxy-amine adduct | MEEDER |

The preferred epoxy-polyamine adducts are PA30, PA31, PA32, PA35, PA40, PA42, PA44 and PA46. PA30, PA35, PA40 and PA46 are the ones that gave the best results.

In a preferred embodiment, the epoxy-polyamine component is added with a polythiol.

Polythiols according to the present invention are molecular structures derived from the esterification reaction of mercapto-carboxylic acids with polyalcohols

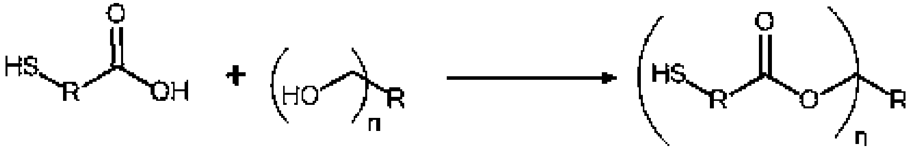

The condensation (esterification) of the mercapto-carboxylic acid with the hydroxy group of the polyalcohol produces molecular structures with - SH (thiol group or sulfanyl group) reactive endings.

Examples of commercially available molecular structures which can be used in the present invention are: 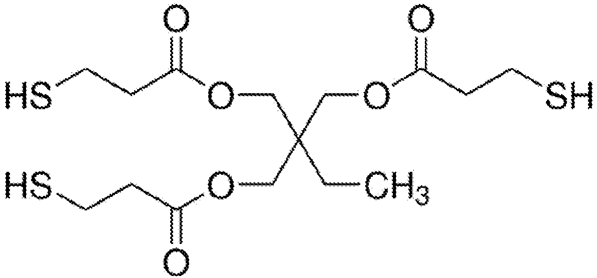 Trimethylolpropane tris(3-mercaptopropionate) 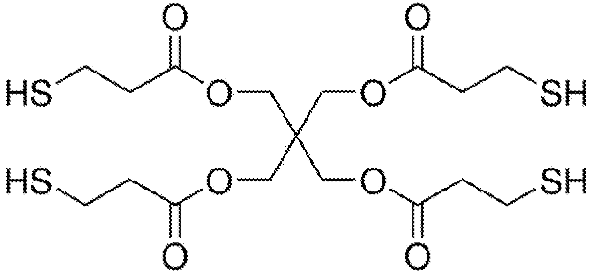 Pentaerythritol tetrakis(3-mercaptopropionate) 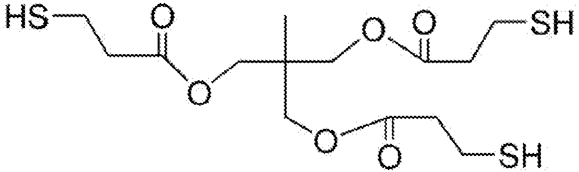 2-hydroxymethyl -2- methyl -1,3 -propanediol tris-(3-mercaptopropionate)

The chemical reactivity of these polymers is directly dependent on the amount of available thiol groups present in the chain.

The amount of available thiol groups present is expressed as a value% (by weight) of the overall molecular structure.

In a preferred embodiment, the polythiol molecular structures (suitable for the purposes of the present invention) have an available thiol value comprised between 7 and 27% by weight, based on the overall molecular structure.

Examples of commercially available polythiol molecular structures, which may be used in the present invention, are:

| | | |
|---|---|---|
| Bruno Bock : Thiocure^{®} 320 | | SH % = 26.8 |
| Bruno Bock : Thiocure^{®} 330 | | SH % = 24 |
| Bruno Bock : Thiocure^{®} 331 | | SH % = 18.4 |
| Bruno Bock : Thiocure^{®} 340 | | SH % = 26 |
| Bruno Bock : Thiocure^{®} 360 | | SH % = 24.1 |
| Bruno Bock : Thiocure^{®} 332 | | SH % = 13.5 |
| Bruno Bock : Thiocure^{®} 333 | | SH % = 7.1 |
| Bruno Bock : Thiocure^{®} 341 | | SH % = 9.1 |
| Kowa | TMMP-LV | SH % = 24 |
| Kowa | PEMP-LV | SH % = 26 |
| Toray | POLYTHIOL QE-340M | SH % = 12 |

The preferred polythiol molecular structures have a percentage of available thiol ranging from 12 to 27% by weight, based on the overall molecular structure.

More preferably, the polythiols which may be used in the present invention are:

| | | |
|---|---|---|
| Bruno Bock : Thiocure^{®} 330 | | SH % = 24 |
| Bruno Bock : Thiocure^{®} 340 | | SH % = 26 |
| Kowa | TMMP -LV | SH % = 24 |
| Kowa | PEMP-LV | SH % = 26 |
| Toray | POLYTHIOL QE-340M | SH % = 12 |

In the paint system according to the invention, the epoxy-polyamine component has the function of making the polythiol emulsifiable.

The epoxy-polyamine adduct of the present invention has the peculiarity of behaving as a surfactant/emulsifier. The hydrophobic component (bisphenol) of its molecular structure is balanced by the hydrophilic polyether chains (*e.g*., Jeffamine^{®}) and the hydrophilic polyamine groups, providing the final molecule with a hydrophilic-lipophilic balance (HLB).

The epoxy-polyamine adduct drags the polythiol (insoluble in water) into the aqueous emulsion, conveying it into the final product.

By introducing a second curing agent for epoxy systems having a thiol (sulfanyl) nature into the reactive system, an acceleration of the in depth polymeric crosslinking (curing time) is obtained, and the product obtained may be classified in the category of "fast dry waterborne system" typical of the paint products used in shipbuilding for the application of horizontal markings.

The Polythiol and Epoxy components require a catalysis (Lewis base) to take full advantage of the high polymerization rate. A basic catalysis (tertiary amine) already present in the present invention is provided by the epoxy-amine component, used for its combined action with the high-boiling glycol ether.

The Mercaptide anion, whose presence in the system is provided by the dissociation of the thiol in the presence of basic catalysis (tertiary amine-ammonium ion), is a nucleophile much stronger than the starting thiol and its reactivity is decidedly higher.

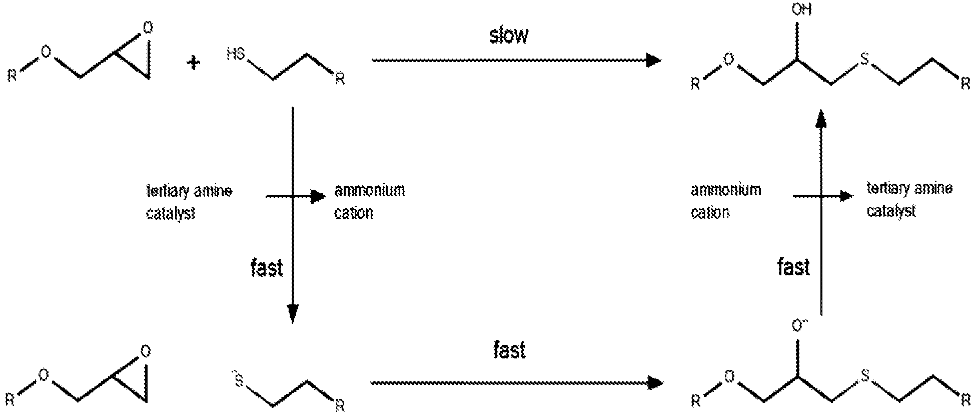

The water-based paint system according to the invention may comprise one or more ingredients selected from pigments, extenders, antibacterial agents, and other specific additives.

One or more ingredients are preferably added to the acrylic component.

Pigments are essential for the color required for the final coating. The pigment may be selected based on both its characteristics for formulation use and its behavior/performance characteristics once in the final coating. For the formulation/production aspects, a micronized pigment, dispersible in the aqueous medium, without the need for considerable shear effort, is preferable. As far as the final performance is concerned, a base material with excellent color rendering and color retention during exposure to external agents will be preferable. Examples of pigments that may be used in the present invention are titanium dioxide, Yellow 65 Mono-azo CAS 652-34-3; Arylide Yellow 74 CAS 6358-31-2; Anthanthrone Red 168 CAS 4378-61-4; Phthalocyanine Green 7 CAS 1328-53-6; Phthalocyanine Blue 15 CAS 147-14-8.

Extenders of various nature are selected to optimize the rheology, the physical performance of the coating and possibly to contain the costs determined by the pigmentation. Extenders suitable for rheological adjustment are micronized minerals with low oil absorption. The specific gravity and particle size will affect the settling of the product in the tin and the abrasion resistance. Other extenders which can positively influence the duration of the coating are micronized silicates which partially take part in the polymer film formation. Examples of extenders are carbonates (CaCO₃), barium sulfate and silicates such as kaolin, mica, talc, and silicas.

The paint system according to the invention may comprise additional additives aimed at optimizing the paint product both in the production process phase and in its behavior during the application and drying phases, such as for example dispersant additives, antifoam additives, anionic and non-ionic surfactants, and rheological additives.

Polyacrylate-type dispersing additives in the extenders and pigments dispersion step. Surfactants of various kinds to adjust the surface tension of the system, by aiding the dispersant in the "wetting" of the extenders during the dispersion and improving the applicability of the product on the surface to be coated (surface wetting).

Antifoam additives that can be used in all those steps of the production process which can create foam stabilization.

Antibacterial agents are additives that have the purpose of preventing the development of bacterial pollution (molds, etc.). The choice of the suitable additive should be made on the basis of the binder nature, and tested in the stability tests of the tin product over time.

Examples of antibacterial agents that are commercially available are the products 1-(3-chloroallyl)-3,5,7-triaza-1-azoniaadamantane chloride combined with a stabilizer (sodium bicarbonate), "DOWICIL 75" from DOW Chemical, or 1,2-benzisothiazolin-3-one in a 20% dipropylene glycol aqueous solution, "Proxel GXL" by Lonza.

A further object of the present invention is represented by the use of the water-based multi-component paint system according to the invention for horizontal road markings.

A further object of the present invention is represented by the coating film obtained by applying the water-based multi-component paint system according to the invention onto a road surface after mixing the components, followed by evaporation of the aqueous medium.

A further object of the present invention is represented by a method of reducing the curing time of high-thickness horizontal markings on a road surface comprising:
i. mixing the components of the water-based paint system according to the invention;
ii. applying a layer of a waterborne paint composition thus obtained onto said road surface; and
iii. evaporating the aqueous medium from said layer to form said wear-resistant high-thickness horizontal road marking onto said road surface.

The application of the paint product is followed by surface deposition of glass beads, preferably of different particle size, which have the purpose of reflecting the tangent light of the headlights of vehicles traveling along the road, in such a way as to improve the poor visibility of road markings in the dark.

The theoretical principle of retroreflectance induced on the marking coating stripe by glass beads was already extensively and thoroughly described in 1952 by *Pocock* B.W., Rhodes C.C.: Principles of glass-bead reflectorization. Highway Research Board Bulletin, 57, 1952, 32-48*.*

Further theoretical analyses have shown that a glass bead of refractive index (RI) equal to 1.5, having 59% of its diameter embedded in the paint, allows the highest retroreflection if the angle between the incident and reflected light is comprised between 0 and 3 degrees.

The glass beads are preferably spherical in shape and have a smooth surface. Recycled glass is preferably used.

In a preferred embodiment, the glass beads have a refractive index comprised between 1.45 and 2.2, preferably between 1.5 and 2.

In a further preferred embodiment, the glass beads have an average diameter comprised between about 100 and 850 µm.

In a further preferred embodiment, between 50% and 80%, preferably between 50% and 60%, of the glass beads diameter is embedded in the coating.

Glass beads are usually prepared in vertical furnaces by flame quenching at about 1200°C starting from ground recycled window glass (refractive index RI equal to1.5) and they can provide white marking coatings with an initial RL of about 350 mcd / m² / Ix.

Examples of glass beads available on the market and usable for the purposes of the present invention are the products Echostar^{®}: 63-212, 125-710, 125-850, 125-1180, 212-1180, 212-1400, 300-600.

The following examples are intended to further illustrate the invention without however limiting it.

### EXAMPLES

### Materials

**TABLE 1 - Paint product composition according to the International Patent Application WO2022/112958 (Reference)**

| Type | % by weight |
|---|---|
| E (acrylic emulsion, DR=50%) | 217.90 |
| Ammonia | 3.70 |
| Polymer dispersant | 5.70 |
| Non-ionic surfactant | 2.00 |
| Antifoam additive | 5.10 |
| Titanium dioxide | 50.00 |
| Calcium carbonate | 535.50 |
| Deionized water | 115.60 |
| Ethanol | 20.20 |
| Dipropylene Glycol n-Butyl Ether (DPnB) | 33.40 |
| Antibacterial additive | 0.10 |
| PA (epoxy-polyamine adduct, DR=100%) | 10.80 |
| Total | 1000.00 |

**TABLE 2 - Multicomponent paint system according to the invention**

| **Component A:** Acrylic polymer | |
|---|---|
| Type | g |
| E (Acrylic emulsion, DR=50%) | 217.90 |
| Ammonia | 3.70 |
| Polymer dispersant | 5.70 |
| Non-ionic surfactant | 2.00 |
| Antifoam additive | 5.10 |
| Titanium dioxide | 50.00 |
| Calcium carbonate | 535.50 |
| Deionized water | 73.4 |
| Ethanol | 20.20 |
| Dipropylene Glycol n-Butyl Ether (DPnB) | 33.40 |
| Antibacterial additive | 0.10 |
| Total | 947 |

| **Component B:** epoxy-amine polymer and polythiol | |
|---|---|
| Type | g |
| PA (epoxy-polyamine adduct, DR=100%) | 10.80 |
| Deionized water | 42.2 |
| Polythiol | 11.4 |
| Total | 64.4 |

| **Component C:** epoxy polymer in aqueous dispersion | |
|---|---|
| Epoxy resin WB, DR=68% | 47.8 |
| Total | 47.8 |

| | |
|---|---|
| DR = % of dry residue Combination of the above components: Component A: 947 g = about 100 pp Component B: 64.4 g = about 6.3 pp Component C: 47.8 g = about 5.0 pp Total: 1055.7 g | |

### Methods

### ASTM D 3359 - 95 Standard Test, measurement of adhesion to the substrate

The cross-cut test is a simple and easily practicable method to evaluate the adhesion of single and multi-layer paint systems.

On an area of at least 10x10 cm, make a lattice incision on the film with a cutter or appropriate metal blade, all the way down to the substrate. Create evenly spaced incisions (8-10 mm) horizontally and vertically until a lattice pattern is created on the test area. Apply adhesive tape to cover the cut area and remove vigorously. Visually observe the lattice area to determine the result.

Adhesion is graded from 5B (cuts edges are completely flat, none of the lattice squares have peeled off) to 0B (paint that has peeled off is more than 65% of the paint squares).

The final coating obtained from the multi-component paint system according to the invention has demonstrated adhesion performance superior to the previous standards, reaching a level of adhesion to the support equal to 5B in accordance with the ASTM D3359-95 standard test, in a very short time and maintaining it even after repeated exposure tests to deteriorating environments.

The time taken by the paint product applied to reach complete curing is not only a function of its chemical nature (composition) but also of the thickness applied.

**Figure 1** shows a graph that put into relation the grams of product applied (grams/m²) and the time required (days/20°C) to reach a curing level such as to pass an abrasion resistance test in a wet environment (wet abrasion test) set up by the present inventors and according to what is described in the standard test "BS EN 13197:2011+A1:2014; Road marking materials - Wear simulator Turntable".

The graph compares the coating composition of the International Patent Application WO2022/112958 in the name of the Applicant (line A) with the multi-component coating system of the present invention (line B).

From the graph it is clear how the multi-component paint system of the present invention reaches complete curing quickly, even when it is applied in a high-thickness (equal to or greater than 800 g/m², preferably comprised between 800 g/m² and 2000 g/m²).

Surprisingly, the inventors have therefore found that the water-based multi-component paint system of the present invention has considerable advantages:
1) The product obtained by combining the reactive systems described above has led to the creation of a completely polymerized coating of high-thickness (≥800g/m²), where prolonged performance of the coating over time is required (2/4 years and more);
2) The coating obtained was free from defects attributable to the molecular tensions deriving from poor coalescence of the structural acrylic polymer (mud cracking), in times suitable for the needs of the road construction industry as regards as horizontal markings application;
3) The coating was obtained in much shorter times than those indicated for waterborne "epoxy-amine" products on the market.

## Claims

1. A multi-component water-based paint system comprising:
- an acrylic component consisting of an acrylic polymer aqueous emulsion anionically stabilized at a basic pH with a volatile base, and containing self-crosslinking functionalities; preferably added with a high-boiling glycol-ether;
- an epoxy component consisting of a liquid epoxy resin;
- an epoxy-polyamine component, preferably added with a polythiol.

2. The paint system according to claim 1, **characterized in that** the amount of each component, expressed as % by weight with respect to the total weight of the components, is selected from:
1) acrylic component comprised between 55% and 75%, preferably of 60-70%;
2) epoxy component comprised between 15% and 30%, preferably of 17-22%;
3) epoxy-polyamine component comprised between 3% and 18%, preferably of 10-15%.

3. The paint system according to claim 2, **characterized in that** the epoxy-polyamine component is added with a polythiol amount comprised between 1% and 15% by weight with respect to the total weight of the components, preferably of 5-10%.

4. The paint system according to any one of the preceding claims, **characterized in that** said acrylic polymer has a minimum film forming temperature, measured according to the method ASTM-D2354 or ISO 2115:1996, comprised between 0 and 40°C, preferably between 10 and 20°C.

5. The paint system according to any one of the preceding claims, **characterized in that** said basic pH is comprised between 8 and 11.

6. The paint system according to any one of the preceding claims, **characterized in that** said volatile base is selected from ammonia, morpholine, 2-methylaminoethanol, 2-dimethylaminoethanol, N-methylmorpholine and ethylenediamine, preferably ammonia.

7. The paint system according to any one of the preceding claims, **characterized in that** said self-crosslinking functionalities contain diketone groups which react with an amine or a hydrazide external to the polymer.

8. The paint system according to any one of the preceding claims, **characterized in that** said high-boiling glycol-ether is selected from the group comprising Diethylene glycol mono-butyl ether (DB), Dipropylene glycol n-butyl ether (DPnB), Propylene glycol phenyl ether (PPh), Tripropylene glycol mono-methyl ether (TPM), preferably DB and DPnB.

9. The paint system according to any one of the preceding claims, **characterized in that** said liquid epoxy resin is an emulsion or in an emulsifiable state.

10. The paint system according to any one of the preceding claims, **characterized in that** said liquid epoxy resin consists of molecular structures of formula:

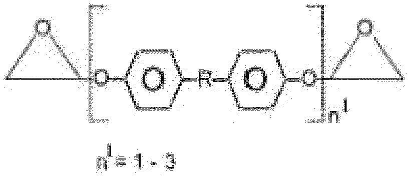

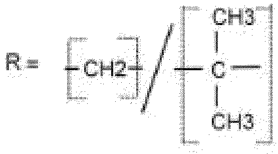

11. The paint system according to any one of the preceding claims, **characterized in that** said liquid epoxy resin has an epoxy equivalent weight (EEW) comprised between 170 and 300 as expressed in grams/equivalent based on the solid resin, preferably between 200 and 250.

12. The paint system according to any one of the preceding claims, **characterized in that** said epoxy-polyamine component is prepared from:
a) at least one bis-epoxy compound, preferably a diglycidyl ether of Bisphenol A and F;
b) at least one alkylamine having a linear or branched C₁-C₆ aliphatic chain;
c) at least one polyetheramine based on oxypropylene (PO), oxyethylene (EO), or a combination thereof;
d) at least one amino- or amide-amino chain terminator.

13. The paint system according to any one of the preceding claims, **characterized in that** said polythiol is selected from Trimethylolpropane tris(3-mercaptopropionate), Pentaerythritol tetrakis(3-mercaptopropionate) or 2-hydroxymethyl-2-methyl-1,3-propanediol tris-(3-mercaptopropionate); preferably said polythiol has an amount of free thiol groups comprised between 7 and 27% by weight based on the overall polythiol structure.

14. The paint system according to any one of the preceding claims, **characterized in that** it further comprises one or more ingredients selected from the group comprising pigments, extenders, antibacterial agents, dispersing additives, antifoam additives, anionic and non-ionic surfactants, and rheological additives.

15. Use of the multi-component water-based paint system according to any one of the preceding claims for horizontal road marking.

16. Coating film obtained by applying the multi-component water-based paint system according to any one of claims 1-14 onto a road surface after mixing the components, followed by evaporation of the aqueous medium.

17. A method of reducing the curing time of a high-thickness horizontal road marking on a road surface comprising:
i. mixing the components of the water-based paint system according to any one of claims 1 to 14;
ii. applying a layer of an aqueous paint composition thus obtained onto said road surface; and
iii. evaporating the aqueous medium from said layer to form said wear resistant high-thickness horizontal road marking onto said road surface.

18. The method according to claim 17, further comprising a step of applying glass beads over said aqueous painting composition layer of step ii).

## Patentansprüche

1. Mehrkomponenten-Anstrichsystem auf Wasserbasis, umfassend:
- eine Acryl-Komponente, die aus einer wässrigen Acrylpolymer-Emulsion besteht, die bei einem basischen pH-Wert mit einer flüchtigen Base anionisch stabilisiert ist und selbstvernetzende Funktionalitäten enthält, vorzugsweise wobei ein hochsiedender Glykolether zugesetzt ist;
- eine Epoxid-Komponente, die aus einem flüssigen Epoxidharz besteht;
- eine Epoxid-Polyamin-Komponente, vorzugsweise wobei ein Polythiol zugesetzt ist.

2. Anstrichsystem nach Anspruch 1, **dadurch gekennzeichnet, dass** die Menge jeder Komponente, ausgedrückt als Gewichtsprozent in Bezug auf das Gesamtgewicht der Komponenten, ausgewählt ist aus:
1) einer Acryl-Komponente, die zwischen 55 % und 75 %, vorzugsweise 60-70 %, liegt;
2) einer Epoxid-Komponente, die zwischen 15 % und 30 %, vorzugsweise 17-22 %, liegt;
3) einer Epoxid-Polyamin-Komponente, die zwischen 3 % und 18 %, vorzugsweise 10-15 %, liegt.

3. Anstrichsystem nach Anspruch 2, **dadurch gekennzeichnet, dass** der Epoxid-Polyamin-Komponente eine Polythiolmenge zugesetzt ist, die zwischen 1 und 15 Gew.-%, bezogen auf das Gesamtgewicht der Komponenten, vorzugsweise 5-10 Gew.-%, liegt.

4. Anstrichsystem nach irgendeinem der vorhergehenden Ansprüche, **dadurch gekennzeichnet, dass** das Acrylpolymer eine Mindestfilmbildungstemperatur, gemessen nach dem Verfahren ASTM-D2354 oder ISO 2115:1996, aufweist, die zwischen 0 und 40°C, vorzugsweise zwischen 10 und 20°C liegt.

5. Anstrichsystem nach irgendeinem der vorhergehenden Ansprüche, **dadurch gekennzeichnet, dass** der basische pH-Wert zwischen 8 und 11 liegt.

6. Anstrichsystem nach irgendeinem der vorhergehenden Ansprüche, **dadurch gekennzeichnet, dass** die flüchtige Base ausgewählt ist aus Ammoniak, Morpholin, 2-Methylaminoethanol, 2-Dimethylaminoethanol, N-Methylmorpholin und Ethylendiamin, vorzugsweise Ammoniak.

7. Anstrichsystem nach irgendeinem der vorhergehenden Ansprüche, **dadurch gekennzeichnet, dass** die selbstvernetzenden Funktionalitäten Diketongruppen enthalten, die mit einem Amin oder einem Hydrazid außerhalb des Polymers reagieren.

8. Anstrichsystem nach irgendeinem der vorhergehenden Ansprüche, **dadurch gekennzeichnet, dass** der hochsiedende Glykolether ausgewählt ist aus der Gruppe, die Diethylenglykolmonobutylether (DB), Dipropylenglykol-n-butylether (DPnB), Propylenglykolphenylether (PPh), Tripropylenglykolmonomethylether (TPM), vorzugsweise DB und DPnB, umfasst.

9. Anstrichsystem nach irgendeinem der vorhergehenden Ansprüche, **dadurch gekennzeichnet, dass** das flüssige Epoxidharz eine Emulsion oder in einem emulgierbaren Zustand ist.

10. Anstrichsystem nach irgendeinem der vorhergehenden Ansprüche, **dadurch gekennzeichnet, dass** das flüssige Epoxidharz aus Molekülstrukturen der folgenden Formel besteht:

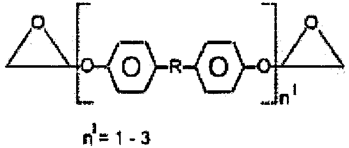

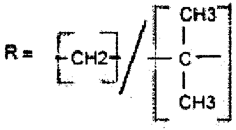

11. Anstrichsystem nach irgendeinem der vorhergehenden Ansprüche, **dadurch gekennzeichnet, dass** das flüssige Epoxidharz ein Epoxid-Äquivalentgewicht (EEW) aufweist, das zwischen 170 und 300, ausgedrückt in Gramm/Äquivalent, bezogen auf das feste Harz, vorzugsweise zwischen 200 und 250, liegt.

12. Anstrichsystem nach irgendeinem der vorhergehenden Ansprüche, **dadurch gekennzeichnet, dass** die Epoxid-Polyamin-Komponente hergestellt wird aus:
a) mindestens einer Bis-Epoxy-Verbindung, vorzugsweise einem Diglycidylether von Bisphenol A und F;
b) mindestens einem Alkylamin mit einer linearen oder verzweigten aliphatischen C₁-C₆-Kette;
c) mindestens einem Polyetheramin auf Basis von Oxypropylen (PO), Oxyethylen (EO) oder einer Kombination davon;
d) mindestens einem Amino- oder Amid-Amino-Kettenabbruchmittel.

13. Anstrichsystem nach irgendeinem der vorhergehenden Ansprüche, **dadurch gekennzeichnet, dass** das Polythiol ausgewählt ist aus Trimethylolpropan-tris(3-mercaptopropionat), Pentaerythritol-tetrakis(3-mercaptopropionat) oder 2-Hydroxymethyl-2-methyl-1,3-propandiol-tris-(3-mercaptopropionat), vorzugsweise wobei das Polythiol eine Menge an freien Thiolgruppen aufweist, die zwischen 7 und 27 Gew.-%, bezogen auf die gesamte Polythiolstruktur, liegt.

14. Anstrichsystem nach irgendeinem der vorhergehenden Ansprüche, **dadurch gekennzeichnet, dass** es ferner einen oder mehrere Inhaltsstoffe umfasst, die aus der Gruppe ausgewählt sind, die Pigmente, Streckmittel, antibakterielle Mittel, Dispergieradditive, Antischaumadditive, anionische und nichtionische Tenside und rheologische Additive umfasst.

15. Verwendung des Mehrkomponenten-Anstrichsystems auf Wasserbasis nach irgendeinem der vorhergehenden Ansprüche für horizontale Straßenmarkierungen.

16. Beschichtungsfilm, der durch Auftragen des Mehrkomponenten-Anstrichsystems auf Wasserbasis nach irgendeinem der Ansprüche 1-14 auf eine Straßenoberfläche nach dem Mischen der Komponenten, gefolgt durch Verdampfen des wässrigen Mediums, erhalten wird.

17. Verfahren zur Verkürzung der Aushärtungszeit einer horizontalen Straßenmarkierung hoher Dicke auf einer Straßenoberfläche, umfassend:
i. Mischen der Komponenten des Anstrichsystems auf Wasserbasis nach irgendeinem der Ansprüche 1 bis 14;
ii. Auftragen einer Schicht einer so erhaltenen wässrigen Anstrichzusammensetzung auf die Straßenoberfläche; und
iii. Verdampfen des wässrigen Mediums aus der Schicht, um die abriebfeste, horizontale Straßenmarkierung hoher Dicke auf der Straßenoberfläche zu bilden.

18. Verfahren nach Anspruch 17, ferner umfassend einen Schritt des Aufbringens von Glasperlen über der Schicht der wässrigen Anstrichzusammensetzung von Schritt ii).

## Revendications

1. Système de peinture à base d'eau multi-composants comprenant :
- un composant acrylique constitué d'une émulsion aqueuse de polymère acrylique stabilisée anioniquement à un pH basique avec une base volatile, et contenant des fonctionnalités d'auto-réticulation ; de préférence additionné d'un glycol-éther à point d'ébullition élevé ;
- un composant époxy constitué d'une résine époxy liquide ;
- un composant époxy-polyamine, de préférence additionné d'un polythiol.

2. Système de peinture selon la revendication 1, **caractérisé en ce que** la quantité de chaque composant, exprimée en % en poids par rapport au poids total des composants, est sélectionnée parmi :
1) un composant acrylique compris entre 55 % et 75 %, de préférence de 60 à 70 % ;
2) un composant époxy compris entre 15 % et 30 %, de préférence de 17 à 22 % ;
3) un composant époxy-polyamine compris entre 3 % et 18 %, de préférence de 10 à 15 %.

3. Système de peinture selon la revendication 2, **caractérisé en ce que** le composant époxy-polyamine est additionné d'une quantité de polythiol comprise entre 1 % et 15 % en poids par rapport au poids total des composants, de préférence de 5 à 10 %.

4. Système de peinture selon l'une quelconque des revendications précédentes, **caractérisé en ce que** ledit polymère acrylique a une température minimale de formation de film, mesurée selon la méthode ASTM-D2354 ou ISO 2115:1996, comprise entre 0 et 40 °C, de préférence entre 10 et 20 °C.

5. Système de peinture selon l'une quelconque des revendications précédentes, **caractérisé en ce que** ledit pH basique est compris entre 8 et 11.

6. Système de peinture selon l'une quelconque des revendications précédentes, **caractérisé en ce que** ladite base volatile est sélectionnée parmi l'ammoniaque, la morpholine, le 2-méthylaminoéthanol, le 2-diméthylaminoéthanol, la N-méthylmorpholine et l'éthylènediamine, de préférence l'ammoniaque.

7. Système de peinture selon l'une quelconque des revendications précédentes, **caractérisé en ce que** lesdites fonctionnalités d'auto-réticulation contiennent des groupes dicétone qui réagissent avec une amine ou un hydrazide extérieur au polymère.

8. Système de peinture selon l'une quelconque des revendications précédentes, **caractérisé en ce que** ledit glycol-éther à point d'ébullition élevé est sélectionné parmi le groupe comprenant du diéthylène glycol mono-butyl éther (DB), du dipropylène glycol n-butyl éther (DPnB), du propylène glycol phényl éther (PPh), du tripropylène glycol mono-méthyl éther (TPM), de préférence DB et DPnB.

9. Système de peinture selon l'une quelconque des revendications précédentes, **caractérisé en ce que** ladite résine époxy liquide est une émulsion ou se trouve à un état émulsifiable.

10. Système de peinture selon l'une quelconque des revendications précédentes, **caractérisé en ce que** ladite résine époxy liquide est constituée de structures moléculaires de formule :

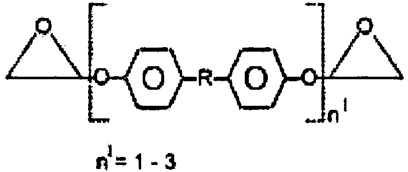

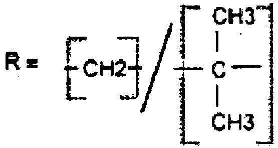

11. Système de peinture selon l'une quelconque des revendications précédentes, **caractérisé en ce que** ladite résine époxy liquide a un poids équivalent époxy (EEW) compris entre 170 et 300, exprimé en grammes/équivalent sur la base de la résine solide, de préférence entre 200 et 250.

12. Système de peinture selon l'une quelconque des revendications précédentes, **caractérisé en ce que** ledit composant époxy-polyamine est préparé à partir :
a) d'au moins un composé bis-époxy, de préférence un éther diglycidylique de bisphénol A et F ;
b) d'au moins une alkylamine ayant une chaîne aliphatique C₁-C₆ linéaire ou ramifiée ;
c) d'au moins une polyétheramine à base d'oxypropylène (PO), d'oxyéthylène (EO), ou d'une combinaison de ceux-ci ;
d) d'au moins un terminateur de chaîne aminé- ou amide aminé.

13. Système de peinture selon l'une quelconque des revendications précédentes, **caractérisé en ce que** ledit polythiol est choisi parmi du tris(3-mercaptopropionate) de triméthylolpropane, du tétrakis(3-mercaptopropionate) de pentaérythritol ou du tris(3-mercaptopropionate) de 2-hydroxyméthyl-2-méthyl-1,3-propanediol ; de préférence ledit polythiol a une quantité de groupes thiol libres comprise entre 7 et 27 % en poids sur la base de la structure globale du polythiol.

14. Système de peinture selon l'une quelconque des revendications précédentes, **caractérisé en ce qu'**il comprend en outre un ou plusieurs ingrédients sélectionnés parmi le groupe comprenant des pigments, des charges, des agents antibactériens, des additifs dispersants, des additifs antimousse, des tensioactifs anioniques et non ioniques, et des additifs rhéologiques.

15. Utilisation du système de peinture à base d'eau multi-composants selon l'une quelconque des revendications précédentes pour un marquage routier horizontal.

16. Film de revêtement obtenu par application du système de peinture à base d'eau multi-composants selon l'une quelconque des revendications 1 à 14 sur une surface routière après mélange des composants, suivi d'une évaporation du milieu aqueux.

17. Procédé de réduction du temps de séchage d'un marquage routier horizontal de forte épaisseur sur une surface routière comprenant :
i. le mélange des composants du système de peinture à base d'eau selon l'une quelconque des revendications 1 à 14 ;
ii. l'application d'une couche d'une composition de peinture aqueuse ainsi obtenue sur ladite surface routière ; et
iii. l'évaporation du milieu aqueux de ladite couche pour former ledit marquage routier horizontal de forte épaisseur et résistant à l'usure sur ladite surface routière.

18. Procédé selon la revendication 17, comprenant en outre une étape d'application de billes de verre sur ladite couche de composition de peinture aqueuse de l'étape ii).
